Europäisches Patentamt

European Patent Office

Office européen des brevets

(11) Publication number: **0 269 283 B1**

# EUROPEAN PATENT SPECIFICATION

(45) Date of publication of patent specification: **02.09.92**

(51) Int. Cl.5: **G01S 5/16**, G01S 15/00, G01S 3/78, G05D 1/03

(21) Application number: **87309624.2**

(22) Date of filing: **30.10.87**

(54) **Position sensing apparatus.**

(30) Priority: **30.10.86 IE 1682/86**

(43) Date of publication of application:
**01.06.88 Bulletin 88/22**

(45) Publication of the grant of the patent:
**02.09.92 Bulletin 92/36**

(84) Designated Contracting States:
**AT BE CH DE ES FR GB GR IT LI LU NL SE**

(56) References cited:
**EP-A- 0 141 964      DE-A- 3 107 674**
**GB-A- 1 139 542      GB-A- 1 181 838**
**GB-A- 2 089 615      GB-A- 2 152 320**
**US-A- 3 714 657      US-A- 3 846 026**

**PATENT ABSTRACTS OF JAPAN, vol. 8, no. 48 (P-258)[1485], 3rd March 1984; & JP-A-58 200 177 (TOSHIHIRO TSUMURA) 21-11-1983**

**PATENT ABSTRACTS OF JAPAN, vol. 10, no. 380 (P-528)[2437], 19th December 1986; & JP-A-61 169 909 (TOSHIBA CORP.) 31-07-1986**

(73) Proprietor: **INSTITUTE FOR INDUSTRIAL RE-SEARCH AND STANDARDS**
**Ballymun Road**
**Ballymun, Dublin 9(IE)**

(72) Inventor: **Byrne, Terence Paul**
**Drumacanoo Churchill**
**Letterkenny County Donegal(IE)**

(74) Representative: **Prutton, Roger et al**
**MARKS & CLERK Alpha Tower Suffolk Street Oueensway**
**Birmingham B1 1TT(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a method and system for sensing position.

More specifically, the invention relates to a position sensing system and a method for using the system, in which the system is of the type which comprises two base stations, each having a radiation generator for generating a rotating radiation beam at a constant angular velocity and in which the radiation generators are spaced-apart a known distance. There is a datum sensor associated with each radiation generator for detecting the radiation beam generated by its associated radiation generator and for generating a timing signal indicative thereof. The system also includes a movable sensor for detection of each radiation beam and a processing means coupled to the movable sensor. The processing means is responsive to the timing signals generated by the datum sensors for determining position data of the movable sensor according to the time delays between the receiving of each radiation beam by its associated datum sensor and by the movable sensor. The position data is horizontal position data as defined by positional angles between position lines between the movable sensor and each radiation generator relative to an arbitrary datum line through a radiation generator. Such a system is described in European Patent Specification No. 141,964 (Inventio). In this system, the datum sensors are connected to a synchronisation transmitter for transmission of an omnidirectional synchronisation light timing signal. The system is for use restricted to a flat surface because if the movable sensors changed in vertical level they would not detect the radiation beams.

Such a use is extremely restrictive and in practice would restrict the system for use on a man-made floor, for example, in a warehouse, factory floor or a yard. Further, an excessively large amount of power would be required by the synchronisation transmitter if distances were relatively large. Therefore, use of this prior art system is extremely restrictive as it could not be used for many situations such as at a quarry or a building site.

United States Patent Specification No. 3,846,026 (Waters) discloses a system for determining parameters such as azimuth, elevation and distance of a movable sensor with respect to a projector location. A beam projector emits a rotating light beam at many different elevational angles with respect to the horizontal and these are intercepted by a movable sensor. Processing circuits both at the projector and at the movable centre are used to determine position in a vertical and horizontal plane using time data for detection of beams and values for the elevational beam projection angles.

This system has many disadvantages including extremely complex circuits and requires the use of a beam projector operating under relatively difficult conditions. Unless the distance between the movable sensor and the projector is very small, to maintain a satisfactorily small incremental vertical distance between the projected beams at the movable sensor a very small incremental elevational angle would be required for the beam. In order for the beam to return to the same vertical height at the movable sensor before an excessive time delay, it would be necessary to rotate the beam at a high speed. Clearly, such a beam projector would be difficult to manufacture and operate and is likely to be unreliable in operation.

It is an object of the present invention to provide a position sensing system which is suitable for use on uneven terrain such as in land surveying and in control of earth moving machinery. It is another object that the system should determine vertical level of a movable sensor. A still further object of the invention is that the system be relatively simple to construct and to use.

This invention is characterised in that the movable sensor comprises a plurality of vertically spaced-apart radiation detectors. The plane of a radiation beam is a reference plane and said processing means comprises means for determining vertical level of the movable sensor with respect to the reference plane whereby said detector detects the reference radiation beam for generation of position data in three dimensions. Further, each datum sensor includes a radio transmitter and the timing signal generated by each datum sensor is a radio signal and the processing means comprises a radio receiver and discriminating means for discriminating the received radio timing signals.

It will be appreciated that the position sensing system as characterised may be used on uneven ground because the movable sensor has vertically spaced-apart detectors. Further, level of the movable sensor is detected in a relatively simple manner by simply monitoring which detector detects the radiation beam. By using a radio transmitter at the datum sensor and a radio receiver at the processing means, the processing of timing signals is relatively simply carried out using inexpensive equipment. Further, obstructions of timing signals do not affect transmission of the timing signals and the signals may be transmitted over a relatively large distance. It will thus be appreciated that the position sensing system of the invention is a radical improvement over the prior art as it may be used in situations such as in quarries where presently available position sensing systems have not been suitable. Further, it will be appreciated that the system is relatively simple in construction and to set up.

Preferably, the system further comprises means for measuring height of the movable sensor above the ground, the processing means being operatively connected to the measuring means to determine level of the ground with respect to the reference plane.

The movable sensor may be securely attached to a vehicle, in which case the distance of the movable sensor above the ground is known to a relatively small tolerance. If the movable sensor is carried by hand or by a person on a vehicle, then the height of the movable sensor above the ground is not known accurately. Thus, use of the measuring means allows accurate measurement of ground level on an on-going basis in such situations and further, in situations where the movable sensor is securely attached to a vehicle, ground level is more accurately determined. This feature allows versatility of the system, which is particularly important in situations where vehicle access is difficult such as in quarries, mines or construction sites.

In one embodiment, the datum sensors are each in a separate housing and are each mounted on a radiation generator or a support for a radiation generator. This is a particularly convenient arrangement for setting-up of the system.

In one embodiment the system includes:-
means for storing pre-set desired position data;
means for comparing the desired position data with the determined position data to produce a set of control position data; and
means for outputting the control position data to a driver of an earth moving machine.

This feature allows not only continuous sensing of movable sensor position but also control of an earth moving machine in a convenient manner.

The system may include a control means which utilises the control position data to control an earth moving machine. This is particularly suitable where an earth moving machine is used in dangerous circumstances where there may be falling debris.

The system may include means for transmitting position data to a separate memory means. This is particularly suitable for preparing graphs of gradients on a site and other surveying data generally.

The invention will be more clearly understood from the following description of a preferred embodiment thereof given by way of example only with reference to the accompanying drawings in which:-

Fig. 1 is a diagrammatic plan view of the lay-out of a position sensing apparatus according to the invention;

Fig. 2 is a diagram illustrating the lay-out for calculation purposes;

Fig. 3 is a diagrammatic perspective view of the apparatus in use with earth moving machinery;

Fig. 4 is a side view of portion of the apparatus;

Fig. 5 is a block diagram illustrating the operation of portion of the apparatus;

Fig. 6 is a diagrammatic view of a movable radiation sensor according to the invention;

Fig. 7 is a detailed side view of the movable radiation sensor of Fig. 6;

Fig. 8 is a flow diagram illustrating one mode of operation of the apparatus;

Fig. 9 is a flow diagram illustrating another operation of the apparatus; and

Fig. 10 is a circuit diagram of portion of the movable radiation sensor of Fig. 6.

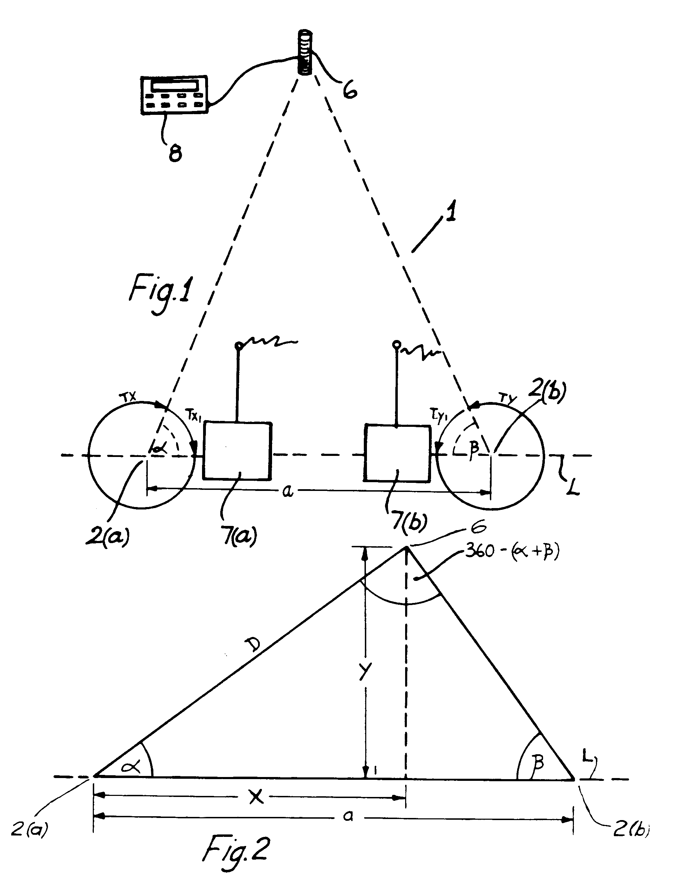

The present invention provides an apparatus and method for determining the position and level of movable objects such as earth moving machines. To help in understanding the invention the overall lay-out of the position sensing apparatus and its method of operation will be discussed initially with reference to Figs. 1 to 3. Referring to the drawings and initially to Figs. 1 and 2, there is illustrated a method of determining the position of a movable sensor 6 forming part of a position sensing apparatus, indicated generally by the reference numeral 1. Two base stations comprising laser generators 2a and 2b each for generating a rotating laser beam are positioned on a datum line L and are spaced-apart a known distance a. Datum radiation sensors 7a and 7b are provided for each generator 2a, 2b and positioned on the datum line L, the datum sensor 7a being associated with the laser generator 2a and the datum sensor 7b being associated with the laser generator 2b. To differentiate the beams the direction of rotation of the laser beams from the laser generators 2a and 2b are opposite, the beam generated by the generator 2a being clockwise and the beam generated by the beam 2b being anti-clockwise. The movable radiation sensor 6 may be secured to a moving object, such as an earth moving machine, the position of which relative to the datum is to be determined.

Considering the operation of the laser generator 2a, as its laser beam rotates, there is a time difference, Tx1 between which the laser beam is detected by the movable sensor 6 and by the datum sensor 7a. When the beam is detected by the datum sensor 7a a radio signal is immediately transmitted by the sensor 7a to be picked up by the movable sensor 6. A further time difference Tx then elapses before the laser beam is again detected by the movable sensor 6. There are similar time differences Ty1 and Ty for the laser generator 2b. Thus the angles $\alpha$ and $\beta$ can both be determined as illustrated in Fig. 2 by the following

formulae:-

$$\alpha = 360^{\circ} \cdot \frac{Tx1}{Tx}$$

and

$$\beta = 360^{\circ} \cdot \frac{Ty1}{Ty}$$

The distance between the two laser generators 2a and 2b on the datum line L, namely, the distance "a" is known. From this, as can be seen from Fig. 2 can be calculated the distance, D, of the movable sensor 6 from the laser generator 2a as follows:

$$D = \frac{a.Sin \ \beta}{Sin \ (360^{\circ} - (\alpha + \beta))}$$

To find the X and Y co-ordinates with respect to an origin at the laser generator 2a, the following formulae may be used:-

X = D Cos $\alpha$
Y = D Sin $\alpha$

The level of the ground at the movable sensor 6 will be obtained by knowing at what vertical position on the movable sensor 6, the laser beams are detected. For example, if H is the height of the movable sensor 6 above ground and x is the vertical separation of separate radiation detectors on the movable sensor 6, the level Z of the datum line L with respect to the ground at the movable sensor 6 may be determined by the following formula:-

$$Z = H + Nx + \frac{Mx}{2} \ ;$$

where the laser beam is detected at its' lowermost edge by the Nth separate radiation detector and the beam has a width of Mx.

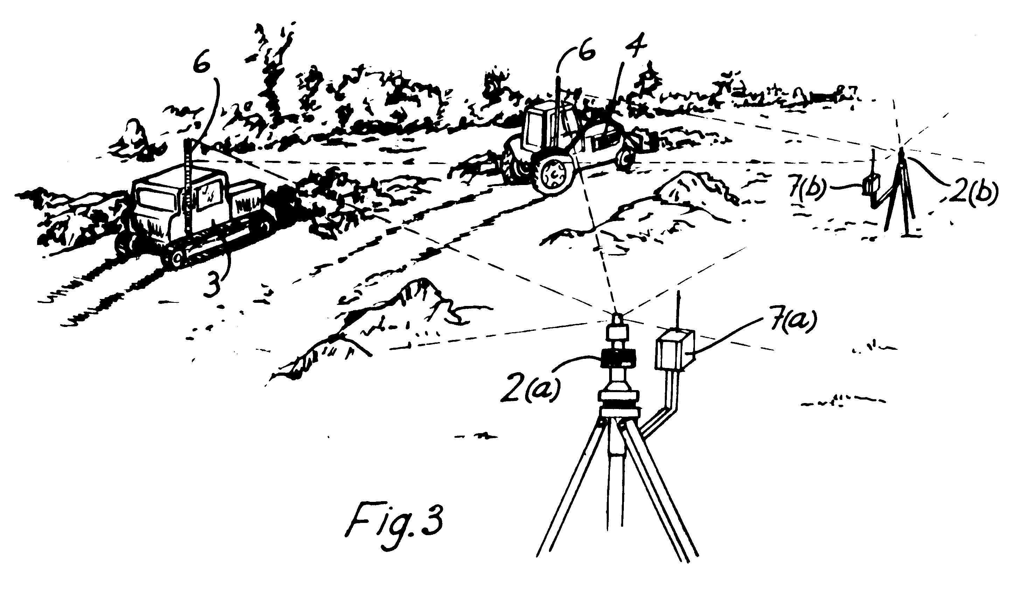

Referring to Figs. 3 to 7, the position sensing apparatus is illustrated in more detail. In Fig. 3 the apparatus 1 is illustrated in use with a bulldozer 3 and a grader 4, each of which carries a movable radiation sensor 6. Each of the movable radiation sensors 6 comprises a staff with separate optical sensors. A two channel radio frequency tone receiver is provided for each sensor 6 to receive signals transmitted by radio frequency tone transmitters associated with each datum sensor 7a, 7b. The receiver is connected to a micro-computer located in the earth moving machinery.

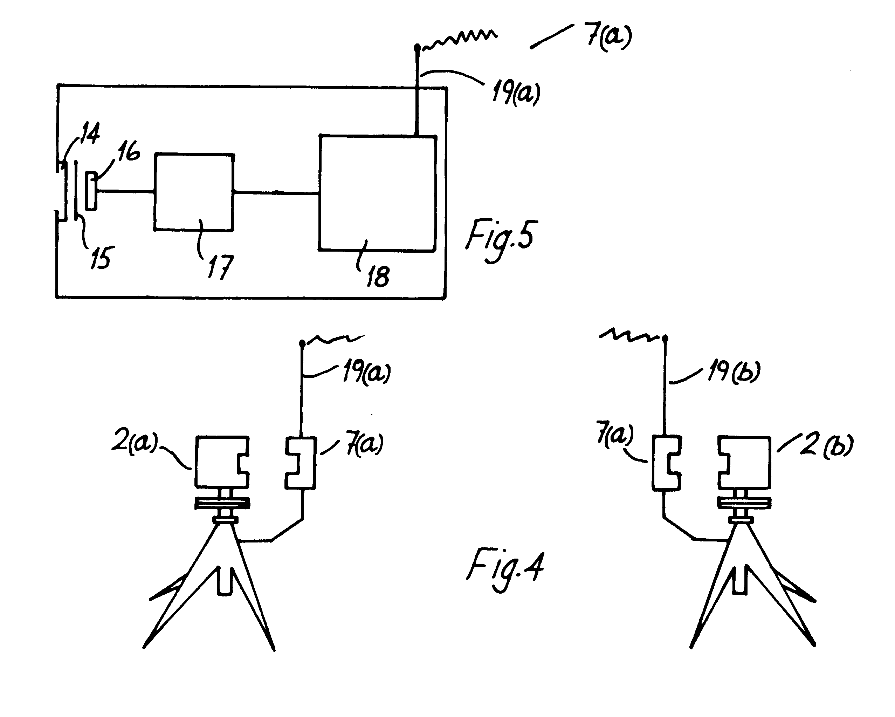

Referring to Figs. 4 and 5, the datum radiation sensors 7(a) and 7(b) are illustrated in more detail. Parts similar to those described with reference to the previous drawings are identified by the same reference numerals. Each datum radiation sensor 7 is mounted on the tripod of its associated laser generator 2(a) or 2(b) so that the datum sensors are on the datum line L, which is preferably horizontal. The radio frequency tone transmitters of the datum radiation sensors 7(a) and 7(b) each have a vertical antenna 19(a) and 19(b), respectively. Referring to Fig. 5 each datum radiation sensor 7(a) and 7(b) includes lenses 14, an optical filter 15 and an optical sensor 16. The arrangement can be seen from the drawing. There are also pre-amplification and signal conditioning circuits 17 and a 2 channel tone burst VHF transmitter 18.

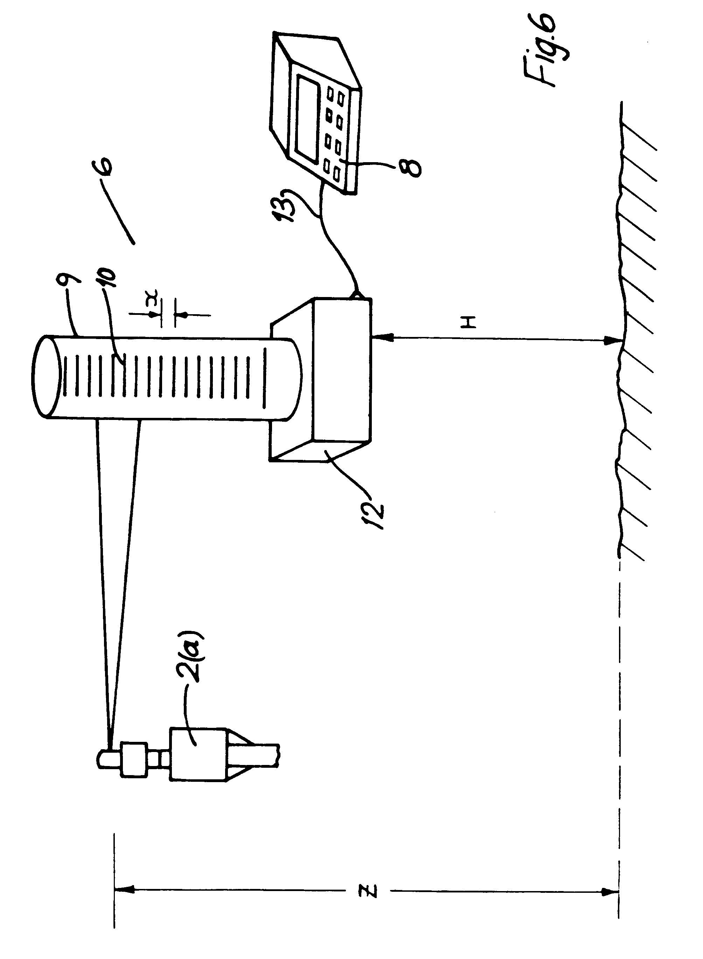

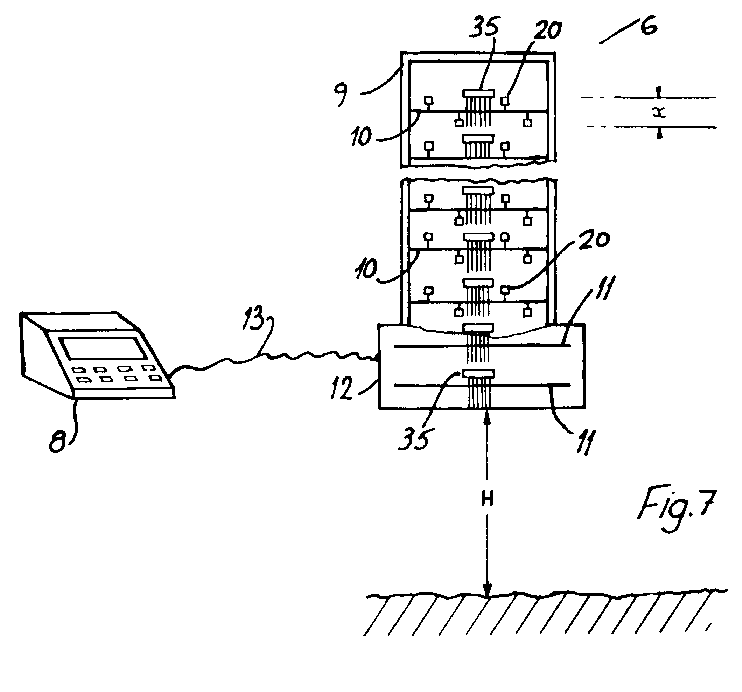

Referring now to Figs. 6 and 7, one of the movable radiation sensors 6 is illustrated in more detail and parts similar to those described with reference to the previous drawings are identified by the same reference numerals. The movable radiation sensors 6 each comprise a cylindrical lens and filter 9 within which is a stack of vertically spaced-apart circuit boards 10, which include radiation detectors, namely, optical sensors and signal conditioning circuits. The movable sensor 6 has a base 12 which contains differentiating means, namely, digital circuit boards 11 for decoding the direction of rotation of the radiation beams - in this case the lasers and two separate VHF channel receivers and also custom built processing and timing circuits. The sensor 6 is linked to a micro-computer 8 by a cable 13. The various circuit boards 10 and 11 are connected via wire-wrap sockets 35.

The distance H of the sensor 6 above ground will be known if the sensor 6 is mounted on a conventional staff or fixed to a work machine, or can be measured by means such as an ultrasonic distance meter.

The level Z of the datum line L with respect to the ground at the movable sensor 6 will be given by the formula given above and in Fig. 6 the value for N is 9 and that for M is 4.

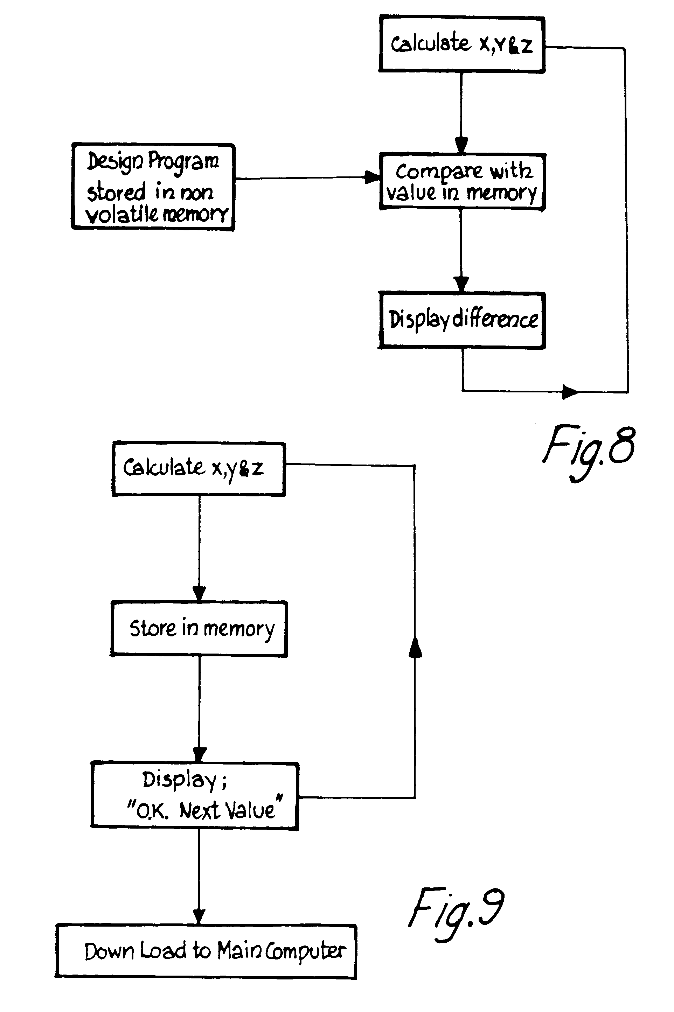

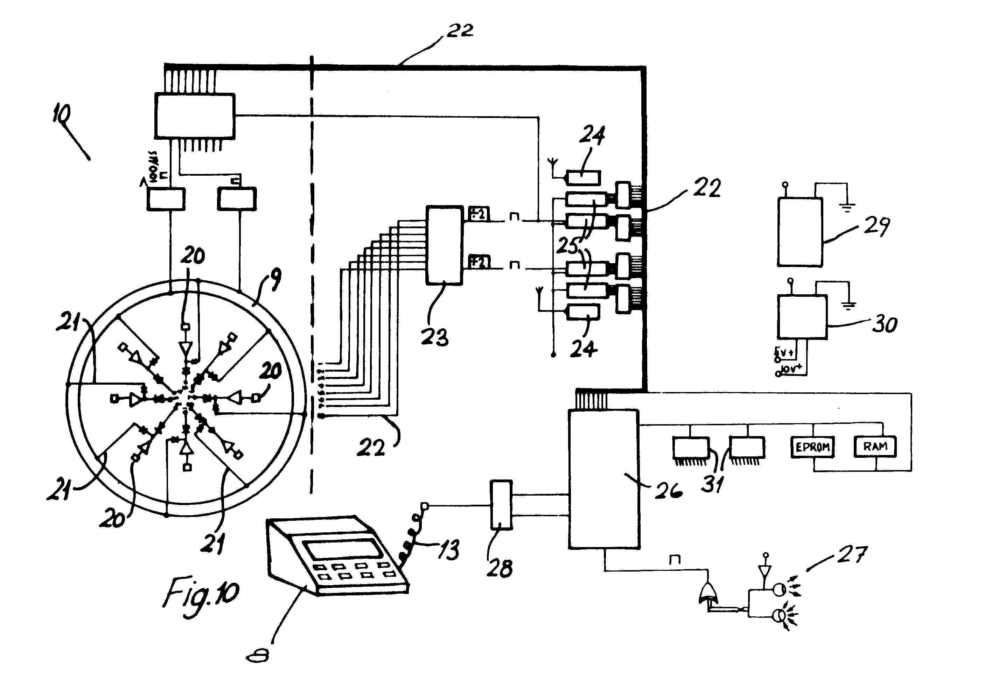

Referring now to Figs. 8 and 9, there are illustrated two different modes of operation of the position sensing apparatus 1. In the mode of Fig. 8, the three parameters X, Y and Z are determined and continuously compared with pre-set values stored in the electronic circuits of the movable radiation sensor 6. These pre-set values are generally for desired paths, excavation depth etc. A difference signal is continuously outputted to the driver of the earth moving machine on which the movable sensor 6 is located. Thus, the driver is provided with continuous guidance indications.

In the mode of Fig. 9, the position values are continuously transmitted along the cable 13 to the micro-computer 8. When the work is completed, the micro-computer 8 is taken to an office and the position values are downloaded to a computer for analysis. This information will be generally used for graphs of gradients at a site.

It will be noted that the micro-computer 8 is not required for the continuous guidance mode of Fig. 8, as the position values need not be stored for future analysis. A display is merely required.

Referring now to Fig. 10 the movable sensor 6 is illustrated in more detail, and again parts similar to those described with reference to the previous drawings are identified by the same reference numerals. Each circuit board 10 includes eight optical sensors in the form of pin diodes 20. Surface mounting is preferably used for the components and there are four pin diodes 20 on top of and underneath each board. Radial light guides 21 are provided to optically separate the pin diodes 20, which are positioned in circumferential segments so that effectively eight segments may be "seen" by a laser beam. The circuit boards 10 also contain monostable circuits for transmitting laser detection signals to an 8-bit data bus 22, via a buffer latch. The data bus 22, in turn, inputs these signals to a direction decoder 23, on a circuit board 11, for determining from which laser generator 2(a) or 2-(b), the laser beam is emitted. Two RF receivers 24 are provided.

The output of the direction decoder is connected via timing circuits 25 to the data bus 22. The movable radiation sensor 6 further comprises a micro-processor 26 for processing the laser detection signals, and the radio signals to determine the position and level values X, Y and Z. These values are then transmitted via an RS 232 port and line buffers 28 to the on-board micro-computer 8 for storage, as described above. An ultrasonic transducer 27 of conventional construction is also provided for determining the height of the movable radiation sensor 6 above the ground. A power supply 29 with conditioning circuitry 30 is provided. Address decodes 31 are provided for the microprocessor 26.

It will be appreciated that the apparatus 1 enables both position and level parameters to be obtained and thus two separate instruments and methods are not required. Further, because of its simplicity, the apparatus 1 is relatively easy to set up and operate and it is envisaged that an operator will not be required to operate the apparatus once it has been set up.

Indeed, considering the way in which position and level sensing is automated the invention may be considered a radical improvement over known technology, as it provides enormous potential for further automation of excavation and building sites generally. For example, it is envisaged that in the future, drivers for earth moving machinery may not be needed.

Because of the arrangement of the optical sensors on the movable sensor and the use of distance sensing equipment, particularly ustrasonic equipment for measuring H, the position values provided by the apparatus 1 are extremely accurate, for example, it is envisaged that an accuracy of +/- 5mm will be obtained for the level indications.

It will be appreciated that because two oppositely rotating radiation beams are used, the circuitry and programs required to determine from which laser generator a detected beam is emitted, is extremely simple, reliable and inexpensive.

Although the position sensing apparatus of the invention has been illustrated having two radiation generators, it is envisaged that it may include only one radiation generator and datum sensor which, in use, would determine one positional angle. The position of the movable sensor may then be found by determining the distance between the radiation generator and the movable sensor by using a distance measuring device such as that which uses modulated light beams. Such a device may be used in combination with an electronic theodolite.

## Claims

1. A system (1) for sensing the position of a movable object, said system comprising:-

    two base stations, each base station comprising a radiation generator (2(a), 2(b)) for generating a rotating radiation beam at a constant angular velocity and in which the radiation generators (2(a), 2(b)) are spaced-apart by a known distance (a);

    a datum sensor (7(a), 7(b)) associated with each radiation generator (2(a), 2(b)) for detecting the radiation beam generated by its associated radiation generator (2(a), 2(b)) and for generating a timing signal indicative thereof;

    a sensor (6) mounted on said object for detecting the radiation beam emitted from each radiation generator (2(a), 2(b)); and

processing means (26) coupled to said sensor (6) and responsive to the timing signals generated by the datum sensors (7(a), 7(b)) for determining position data of said sensor (6) according to the time delays between the receiving of each radiation beam by its associated datum sensor (7(a), 7(b)) and by said sensor (6), the position data including horizontal position data as defined by positional angles ($\alpha$, $\beta$) between position lines between said sensor (6) and each radiation generator (2(a), 2(b)) relative to an arbitrary datum line (L) through a radiation generator,

characterised in that:

the plane of a radiation beam is a reference plane, said sensor (6) comprises a plurality of vertically spaced-apart radiation detectors (10), and said processing means (26) comprises means for determining vertical level of said sensor (6) with respect to said reference plane whereby said detector (10) detects the reference radiation beam for generation of position data in three dimensions (X, Y, Z);

each datum sensor (7(a), 7(b)) includes a radio transmitter (18), and the timing signal generated by each datum sensor (7(a), 7(b)) is a radio signal; and

said processing means (26) comprises a radio receiver (24) and discriminating means (23) for discriminating between the received radio timing signals.

2. A position sensing system as claimed in Claim 1, characterised in that the system further comprises means (27) for measuring height (H) of said sensor (6) above the ground, said processing means (26) being operatively connected to the measuring means (27) to determine level of the ground with respect to said reference plane.

3. A position sensing system as claimed in Claims 1 or 2, wherein said datum sensors (7-(a), (b)) are each in a separate housing and are each mounted on a radiation generator (2(a), 2-(b)) or a support for a radiation generator.

4. A position sensing system as claimed in any preceding claim, characterised in that the system includes:-

means (12) for storing pre-set desired position data;

means (12) for comparing the desired position data with the determined position data to produce a set of control position data; and

means (12) for outputting the control position data to a driver of an earth moving machine.

5. A position sensing system as claimed in Claim 4, characterised in that the system includes control means which utilises the control position data to control an earth moving machine.

6. A position sensing system as claimed in Claims 4 or 5, characterised in that the system includes means (13) for transmitting position data to a separate memory means (18).

7. A method for determining the position of a sensor (6) mounted on a movable object, using a position sensing system (1) comprising a pair of radiation generators (2(a), 2(b)) spaced-apart by a known distance (a), a datum sensor (7(a), 7(b)) associated with each radiation generator and processing means (26) coupled to said sensor (6), the method comprising the steps of:-

establishing an arbitrary datum line (L) through a radiation generator (2(a), 2(b));

generating a rotating radiation beam at each radiation generator (2(a), 2(b)) at a constant angular velocity;

detecting the radiation beam from the associated radiation generator (2(a), 2(b)) at each datum sensor (7(a), 7(b)) and generating a timing signal indicative thereof;

detecting each radiation beam at said sensor (6);

by said processing means (26), determining position data by determining time delays between the reception of a radiation signal by each datum sensor (7(a), 7(b)) as indicated by said timing signals and detection of each radiation beam by said sensor (6) to provide a measure of the positional angles ($\alpha$, $\beta$) between position lines between the movable sensor and each radiation generator relative to the datum line (L),

characterised in that:-

said sensor (6) comprises a plurality of vertically spaced-apart radiation detectors (10) and the step of determining position data comprises the further steps of identifying the plane of a radiation beam as a reference plane, and determining the vertical level of said sensor (6) with respect to said reference plane whereby said detector (10) detects the reference radiation beam for generation of position data in three dimensions (X. Y, Z); and;

the timing signal generated by each datum sensor is a radio signal, the radio timing signals being discriminated between by said processing means (26).

**Patentansprüche**

1. System (1) zum Erfassen der Position eines bewegbaren Objektes, wobei das System aufweist:

zwei Basisstationen, wobei jede Basisstation einen Strahlungsgenerator (2(a), 2(b)) aufweist zum Erzeugen eines drehenden Richtstrahles mit konstanter Winkelgeschwindigkeit, und bei dem die Strahlungsgeneratoren (2(a), 2(b)) in einem bekannten Abstand (a) voneinander angeordnet sind;

einen jedem Strahlungsgenerator (2(a), 2(b)) zugeordneten Datumssensor (7(a), 7(b)) zum Erfassen des durch seinen zugeordneten Strahlungsgenerator (2(a), 2(b)) erzeugten Richtstrahles und zum Erzeugen eines dieses anzeigenden Zeitsignales;

einen auf dem Objekt angebrachten Sensor (6) zum Erfassen des von jedem Strahlungsgenerator (2(a), 2(b)) emitierten Richtstrahles und

ein mit dem Sensor (6) verbundenes und auf die von dem Datumssensoren (7(a), 7(b)) erzeugten Zeitsignale reagierendes Verarbeitungsmittel (26) zum Bestimmen von Positionsdaten des Sensors (6) gemäß den Zeitverzögerungen zwischen dem Empfang eines jeden Richtstrahles durch seine zugeordneten Datumssensor (7(a), 7(b)) und den Sensor (6), wobei die Positionsdaten horizontale Positionsdaten enthalten, wie sie durch Positionswinkel ($\alpha$, $\beta$) zwischen Positionslinien zwischen dem Sensor (6) und jedem Strahlungsgenerator (2(a), 2(b)) relativ zu einer willkürlichen Datumslinie (L) durch einen Strahlungsgenerator definiert sind,

dadurch gekennzeichnet, daß die Ebene eines Richtstrahles eine Bezugsebene ist, der Sensor (6) eine Mehrzahl von vertikal in einem Abstand voneinander angeordnete Strahlungsdetektoren (10) aufweist und daß Verarbeitungsmittel (26) Mittel zum Bestimmen der vertikalen Höhe des Sensors (6) im Verhältnis zu der Bezugsebene aufweist, wodurch der Detektor (10) den Bezugsrichtstrahl zum Erzeugen von Postitionsdaten in drei Dimensionen (X, Y, Z) erfaßt;

daß jeder Datumssensor (7(a), 7(b)) einen Radiosender (18) enthält und daß von jedem Datumssensor (7(a), 7(b)) erzeugte Zeitsignal ein Radiosignal ist und

daß daß Verarbeitungsmittel (26) einen Radioempfänger (24) und Unterscheidungsmittel (23) zum Unterscheiden zwischen den empfangenen Radiosignalen aufweist.

2. Positionserfassungssystem nach Anspruch 1, dadurch gekennzeichnet, daß das System weiterhin Mittel (27) zum Messen der Höhe (H) des Sensors (6) über dem Boden aufweist, wobei das Verarbeitungsmittel (26) betriebsmäßig mit dem Meßmittel (27) zum Bestimmen des Pegels des Bodens im Verhältnis zu der Bezugsebene verbunden ist.

3. Positionserfassungssystem nach Anspruch 1 oder 2,

bei dem die Datumssensoren (7(a), 7(b)) jeweils in einem getrennten Gehäuse vorgesehen sind und jeder auf einem Strahlungsgenerator (2(a), 2(b)) oder einem Träger für einen Strahlungsgenerator angebracht sind.

4. Positionserfassungssystem nach einem der vorhergehenden Ansprüche,

dadurch gekennzeichnet, daß das System aufweist:

Mittel (12) zum Speichern voreingestellter gewünschter Positionsdaten;

Mittel (12) zum Vergleichen der gewünschten Positionsdaten mit den bestimmten Positionsdaten zum Erzeugen eines Satzes von Steuerpositionsdaten und

Mittel (12) zum Ausgeben der Steuerpositionsdaten an einen Fahrer einer Erdbewegungsmaschine.

5. Positionserfassungssystem nach Anspruch 4, dadurch gekennzeichnet, daß das System Steuermittel aufweist, welches die Steuerdaten zum Steuern einer Erdbewegungsmaschine benutzt.

6. Positionserfassungssystem nach Anspruch 4 oder 5,

dadurch gekennzeichnet, daß das System Mittel (13) zum Übertragen von Positionsdaten an ein getrenntes Speichermittel (18) enthält.

7. Verfahren zum Bestimmen der Position eines auf einem bewegbaren Objekt angebrachten Sensors (6) unter Benutzung eines Erfassungssystemes (1) mit einem Paar von in einem bekannten Abstand (a) angeordneten Strahlungsgeneratoren (2(a), 2(b)), einem jeden Strahlungsgenerator zugeordneten Datumssensor (7(a), 7(b)) und mit dem Sensor (6) verbundenen Verarbeitungsmittel (26), wobei das Verfahren die Schritte aufweist:

Erstellen einer willkürlichen Datumslinie (L) durch einen Strahlungsgenerator (2(a), 2(b));

Erzeugen eines drehenden Richtstrahles an jedem Strahlungsgenerator (2(a), 2(b)) mit einer konstanten Winkelgeschwindigkeit;

Erfassen des Richtstrahles von dem zugeordneten Strahlungsgenerator (2(a), 2(b)) bei jedem Datumssensor (7(a), 7(b)) und Erzeugen eines dieses anzeigenden Zeitsignales;

Erfassen von jedem Richtstrahl an dem Datumssensor (6);

durch das Verarbeitungsmittel (26) bestimmen von Positionsdaten durch Bestimmen von Zeitverzögerungen zwischen dem Empfang eines Strahlungssignales von jedem Datumssensor (7(a), 7(b)), wie es durch die Zeitsignale angezeigt ist und Erfassen von jedem Richtstrahl durch den Sensor (6) zum Vorsehen eines Maßes der Positionswinkel ($\alpha$, $\beta$) zwischen Positionslinien zwischen dem bewegbaren Sensor und jedem Strahlungsgenerator relativ zu der Datumslinie (L),

dadurch gekennzeichnet, daß der Sensor (6) eine Mehrzahl von vertikal in einem Abstand voneinander angeordnete Strahlungsdetektoren (10) aufweist und der Schritt des Bestimmens der Positionsdaten die weiteren Schritte aufweist des Identifizierens der Ebene des Richtstrahles als Bezugsebene und des Bestimmens der vertikalen Höhe den Sensors (6) im Verhältnis zu der Bezugsebene, wodurch der Detektor (10) den Bezugsrichtstrahl zum Erzeugen von Postitionsdaten in drei Dimensionen (X, Y, Z) erfaßt; und

daß das von jedem Datumssensor erzeugte Zeitsignal ein Radiosignal ist, wobei zwischen den Radiozeitsignalen durch das Verarbeitungsmittel (26) unterschieden wird.

**Revendications**

1.  Un système (1) pour la localisation d'un objet mobile, ledit système comprenant:

    deux stations de base, chaque station de base comprenant un générateur de rayonnement (2(a), 2(b)) pour produire un faisceau de rayonnement rotatif à une vitesse angulaire constante, et dans lequel les générateurs de rayonnement (2(a), 2(b)) sont espacés d'une distance connue (a);

    un capteur de données de référence (7(a), 7(b)) associé à chaque générateur de rayonnement (2(a), 2(b)) pour détecter le faisceau de rayonnement généré par son générateur de rayonnement associé (2(a), 2(b)) et pour produire un signal de synchronisation qui en soit indicatif;

    un capteur (6) monté sur ledit objet, pour détecter le faisceau de rayonnement émis par chaque générateur de rayonnement (2(a), 2(b); et

    un moyen de traitement (26) couplé au dit capteur (6) et réagissant aux signaux de synchronisation produits par les capteurs de données de référence (7(a), 7(b)), pour déterminer des données de positionnement du dit capteur (6) en fonction des temps de retard entre la réception de chaque faisceau de rayonnement par son capteur de données de référence associé (7(a), 7(b)) et par ledit capteur (6), les données de positionnement englobant des données sur la position horizontale comme défini par les angles de position ($\alpha$, $\beta$) entre des lignes de position entre ledit capteur (6) et chaque générateur de rayonnement (2(a), 2(b)) par rapport à une ligne de référence arbitraire (L) à travers un générateur de rayonnement,

    caractérisé en ce que:

    le plan d'un faisceau de rayonnement est un plan de référence, en ce que ledit capteur (6) comprend plusieurs détecteurs de rayonnement espacés verticalement (10) et en ce que ledit moyen de traitement (26) comprend un moyen pour déterminer le niveau vertical du dit capteur (6) par rapport au dit plan de référence, ledit détecteur (10) détectant ainsi le faisceau de rayonnement de référence en vue de la production de données de positionnement en trois dimensions (X, Y, Z);

    chaque capteur de données de référence (7(a), 7(b)) englobe un émetteur radio (18), le signal de synchronisation produit par chaque capteur de données de référence (7(a), 7(b)) étant un signal radio; et

    ledit moyen de traitement (26) comprend un récepteur radio (24) et un moyen de discrimination (23) assurant la discrimination entre les signaux radio de synchronisation reçus.

2.  Un système de localisation selon la revendication 1, caractérisé en ce que le système comprend en outre un moyen (27) pour mesurer la hauteur (H) du dit capteur (6) au-dessus du sol, ledit moyen de traitement (26) étant connecté en service au moyen de mesure (27) pour déterminer le niveau du sol par rapport au dit plan de référence.

3.  Un système de localisation selon les revendications 1 ou 2, dans lequel lesdits capteurs de données de référence (7(a), 7(b)) se trouvent chacun dans un boîtier séparé et sont chacun montés sur un générateur de rayonnement (2(a), 2(b)) ou sur un support pour un générateur de rayonnement.

4.  Un système de localisation selon l'une quelconque des revendications précédentes, caractérisé en ce que le système englobe:-

    un moyen (12) pour mémoriser les données de positionnement préréglées prescrites;

    un moyen (12) pour comparer les données de positionnement prescrites avec les données de positionnement déterminées en vue de produire un ensemble de données de positionnement de contrôle; et

un moyen (12) pour transmettre les données de positionnement de contrôle à un conducteur d'un engin de terrassement.

5. Un système de localisation selon la revendication 4, caractérisé en ce que le système englobe un moyen de contrôle, utilisant les données de positionnement de contrôle pour contrôler un engin de terrassement.

6. Un système de localisation selon les revendications 4 ou 5, caractérisé en ce que le système englobe un moyen (13) pour transmettre les données de positionnement à un moyen de mémoire séparé (18).

7. Un procédé permettant de déterminer la position d'un capteur (6) monté sur un objet mobile, avec utilisation d'un système de localisation (1) comprenant une paire de générateurs de rayonnement (2(a), 2(b)) espacés d'une distance connue (a), un capteur de données de référence (7(a), 7(b)), associé à chaque générateur de rayonnement ainsi qu'un moyen de traitement (26) couplé au dit capteur (6), le procédé comprenant les étapes suivantes:

établissement d'une ligne de référence arbitraire (L) à travers un générateur de rayonnement (2(a), 2(b));

génération d'un faisceau de rayonnement rotatif à chaque générateur de rayonnement (2(a), 2(b)) à une vitesse angulaire constante;

détection du faisceau de rayonnement du générateur de rayonnement associé (2(a), 2(b)) à chaque capteur de données de référence (7-(a), 7(b)) et production d'un signal de synchronisation qui en soit indicatif;

détection de chaque faisceau de rayonnement au dit capteur (6);

détermination, au moyen du dit moyen de traitement (26), de données de positionnement en déterminant des temps de retard entre la réception d'un signal de rayonnement par chaque capteur de données de référence (7(a), 7-(b) comme indiqué par lesdits signaux de synchronisation, et détection de chaque faisceau de rayonnement par ledit capteur (6) en vue de fournir une mesure des angles de position ($\alpha$, $\beta$) entre des lignes de position entre le capteur mobile et chaque générateur de rayonnement par rapport à la ligne de référence (L),

caractérisé en ce que:-

ledit capteur (6) comprend plusieurs détecteurs de rayonnement espacés verticalement (10) et en ce que l'étape de détermination de données de positionnement comprend les étapes ultérieures d'identification du plan d'un faisceau de rayonnement comme plan de référence, ainsi que de détermination du niveau vertical du dit capteur (6) par rapport au dit plan de référence, ledit détecteur (10) détectant ainsi le faisceau de rayonnement de référence en vue de la production de données de positionnement en trois dimensions (X, Y, Z); et

le signal de synchronisation produit par chaque capteur de données est un signal radio, la discrimination entre les signaux de synchronisation radio étant assurée par ledit moyen de traitement (26).

EP 0 269 283 B1

Fig.1

Fig.2

10

Fig.3

EP 0 269 283 B1

14
16
15
17
18

19(a)

7(a)

*Fig.5*

19(a)

2(a)

7(a)

19(b)

7(a)

2(b)

*Fig.4*

Fig.6

EP 0 269 283 B1

Fig.7

Fig.8

Fig.9

Fig.10